(19) Europäisches Patentamt
European Patent Office
Office européen des brevets

(11) **EP 0 725 763 B1**

(12) **FASCICULE DE BREVET EUROPEEN**

(45) Date de publication et mention
de la délivrance du brevet:
**29.04.1998 Bulletin 1998/18**

(21) Numéro de dépôt: **95928532.1**

(22) Date de dépôt: **23.08.1995**

(51) Int Cl.⁶: **C03C 25/02**, G02B 6/44

(86) Numéro de dépôt international:
**PCT/FR95/01106**

(87) Numéro de publication internationale:
**WO 96/06054 (29.02.1996 Gazette 1996/10)**

(54) **FIBRE OPTIQUE REVETUE D'UNE COUCHE PROTECTRICE DE BORE AMORPHE, ET PROCEDE DE DEPOT D'UNE TELLE COUCHE**

EINE MIT EINER SCHUTZSCHICHT BEKLEIDETE OPTISCHE FASER UND VERFAHREN ZU DEREN ABSCHEIDUNG

OPTICAL FIBER COVERED WITH AN AMORPHOUS BORON PROTECTIVE LAYER AND METHOD OF DEPOSITING SUCH A LAYER

(84) Etats contractants désignés:
**DE DK FR GB IT NL SE**

(30) Priorité: **25.08.1994 FR 9410283**

(43) Date de publication de la demande:
**14.08.1996 Bulletin 1996/33**

(73) Titulaire: **ALCATEL ALSTHOM COMPAGNIE GENERALE D'ELECTRICITE**
**75008 Paris (FR)**

(72) Inventeurs:
- **BREHM, Claude**
  **F-92120 Montrouge (FR)**
- **VANDENBULCKE, Lionel**
  **F-45650 Saint-Jean-le-Blanc (FR)**
- **BONIORT, Jean-Yves**
  **F-91470 Limours (FR)**
- **LAVIGNE, Bruno**
  **F-92160 Antony (FR)**

(74) Mandataire: **Feray, Valérie et al**
**c/o ALCATEL ALSTHOM,**
**Département de Propriété Industrielle,**
**30, avenue Kléber**
**75116 Paris (FR)**

(56) Documents cités:
EP-A- 0 149 323            WO-A-82/01543
WO-A-87/05831            US-A- 4 319 803
US-A- 5 246 746

## Description

La présente invention conceme une fibre optique revêtue d'une couche protectrice de bore amorphe ainsi qu'un procédé de dépôt d'une telle couche.

La structure classique d'une fibre optique est bien connue : une fibre optique comprend un coeur optique, servant au guidage de la majorité des ondes lumineuses, entouré d'une gaine optique, le coeur et la gaine étant tous deux constitués d'un matériau à base de silice, plus ou moins dopée selon les zones du coeur ou de la gaine. On définit ici la gaine optique au sens large, c'est-à-dire que la gaine optique comprend toutes les couches à base de silice qui entourent le coeur, quel que soit le procédé avec lequel elles ont été obtenues.

Dans certaines fibres optiques connues, la gaine optique est directement recouverte d'un revêtement de résine, destiné à éviter en partie les conséquences des microcourbures subies par la fibre, notamment lorsqu'elle est installée dans un câble. En effet, lors de son installation et de son utilisation, la fibre optique est soumise à des contraintes en flexion et en traction qui conduisent à long terme à sa fatigue mécanique, c'est-à-dire à une dégradation de ses propriétés mécaniques ayant pour conséquence une dégradation de ses performances de transmission.

Dans d'autres fibres optiques connues, destinées principalement à être utilisées dans des milieux humides (notamment dans des applications sous-marines) où la fibre optique est soumise à l'action de l'eau et des ions hydroxyles OH⁻, une couche protectrice est disposée directement sur la gaine optique, sous le revêtement de résine. En effet, lorsque la fibre optique est soumise à des contraintes qui entraînent sa fatigue mécanique, et provoquent par conséquent des microfissures à sa surface, son attaque par l'humidité ou les ions OH- provoque la croissance des microfissures existant à sa surface, ce qui affaiblit la fibre pour aboutir à sa rupture.

De manière connue, la couche protectrice réalisée sur de telles fibres est en général constituée de carbone non cristallin ou turbostratique (c'est-à-dire ayant une structure telle qu'il est rendu très étanche par comparaison au carbone graphite) déposé par exemple par voie chimique en phase vapeur sur la fibre optique.

Une telle couche protectrice de carbone n'est toutefois pas entièrement satisfaisante : si elle assure une étanchéité suffisante de la fibre, elle présente en revanche une mauvaise résistance à l'abrasion, ceci étant dû au fait qu'elle ne possède pas une dureté suffisante. Elle ne protège donc pas la fibre à long terme contre l'abrasion due à son frottement contre les autres fibres lorsque plusieurs d'entre elles sont installées dans un câble, ou encore à son frottement contre la paroi intérieure du câble dans lequel elle est installée. Or l'abrasion de la fibre a pour conséquence l'apparition de microfissures à sa surface, qui entraînent des risques de rupture de la fibre.

Pour éviter l'abrasion de la fibre, il faut que l'épaisseur du revêtement de résine de la fibre soit importante, en pratique au moins égale à 60 μm. Or ceci est très pénalisant lorsque l'on souhaite, comme c'est le cas actuellement, accroître la capacité des câbles à fibres optiques, de sorte qu'ils puissent contenir jusqu'à 50 à 100 fibres optiques. Ainsi, un revêtement de résine d'épaisseur importante est préjudiciable à la compacité du câble, cette compacité étant nécessaire pour pouvoir utiliser le câble dans des applications où l'espace disponible est très réduit.

Le brevet US-4 319 803 propose de réaliser la couche protectrice en bore amorphe, ce qui devrait permettre d'éliminer les inconvénients mentionnés ci-dessus.

Un procédé est par ailleurs connu, d'après l'article intitulé "Chemical Vapor Deposition of Amorphous Boron on Massive Substrates", paru dans Journal of Electrochemical Society - Solid-State Science and Technology - Février 1976, pour effectuer un dépôt par voie chimique en phase vapeur de bore amorphe, par réduction du chlorure de bore gazeux $BCl_3$ par l'hydrogène $H_2$ sur des substrats inertes vis-à-vis du chlorure de bore, c'est-à-dire ne réagissant pas avec celui-ci.

Un procédé de ce type, utilisant le chlorure de bore ou tout autre halogénure de bore tel que $BF_3$ (fluorure de bore) ou $BBr_3$ (bromure de bore) est simple et peu onéreux à mettre en oeuvre. Notamment, il évite l'emploi des hydrures (comme $SiH_4$, préconisé dans le brevet US-4 319 803) comme réactifs de départ, ces composés, et en particulier l'hydrure de bore $B_2H_6$, étant très toxiques et explosifs en présence d'air, et ne permettant pas d'obtenir des vitesses de dépôt importantes.

Toutefois, il n'est pas possible d'appliquer cette méthode au dépôt de bore amorphe directement sur de la silice $SiO_2$, car cette dernière n'est pas inerte vis-à-vis des halogénures de bore, c'est-à-dire qu'elle réagit chimiquement avec eux.

Le but de la présente invention est donc de mettre au point une fibre optique munie d'une couche protectrice de bore qui peut être réalisée au moyen de la méthode la plus simple et la moins coûteuse connue à l'heure actuelle en évitant toute interaction entre l'halogénure de bore et la silice de la fibre optique.

La présente invention propose à cet effet une fibre optique comprenant un coeur optique entouré d'une gaine optique, tous deux en un matériau à base de silice, et une couche protectrice constituée de bore amorphe, **caractérisée en ce que** ladite couche protectrice de bore est déposée sur une couche de carbone non cristallin, elle-même déposée directement sur ladite gaine optique.

Le carbone est inerte vis-à-vis des halogénures de bore, c'est-à-dire qu'il ne réagit pas avec eux. La couche de carbone sert donc de barrière de protection pour éviter toute interaction entre l'halogénure de bore et la silice de la gaine optique lors du dépôt de bore. En outre, la couche de carbone assure une meilleure dénudabilité et une meilleure herméticité de la fibre optique obtenue.

Un procédé de dépôt selon l'invention d'une couche de bore amorphe sur une fibre optique comprenant un coeur optique entouré d'une gaine optique, tous deux en un matériau à base de silice,

**se caractérise par le fait qu'**il comprend une étape de dépôt d'une couche de carbone sur ladite fibre, suivie d'une étape ultérieure de dépôt sur ladite couche de carbone de ladite couche protectrice de bore amorphe par voie chimique en phase vapeur, par réduction d'un halogénure de bore par l'hydrogène $H_2$.

La fibre selon l'invention permet d'effectuer le dépôt, par la méthode la plus simple et la moins coûteuse connue, d'une couche de bore amorphe sur une fibre optique, tout en évitant les interactions pouvant se produire entre l'halogénure de bore utilisé et la silice.

La température du dépôt de bore sera par exemple choisie entre 1050 et 1250°C.

De manière avantageuse, le rapport R de la concentration molaire en halogénure de bore sur celle d'hydrogène est compris entre 1/20 et 2/3.

Selon une caractéristique additionnelle de la présente invention, le revêtement de bore est effectué en ligne avec le fibrage, et la vitesse de défilement de la fibre durant son revêtement par le bore est au moins égale à 100 m/min.

Pour déposer une couche de bore amorphe, c'est-à-dire non cristallin, il est nécessaire que la vitesse de renouvellement des réactifs gazeux dans le réacteur de dépôt soit élevée. Ceci est obtenu de manière avantageuse dans le cas de la présente invention grâce au fait que la fibre défile à grande vitesse dans ce réacteur, c'est-à-dire à une vitesse au moins égale à 100 m/min.

La vitesse de dépôt du bore amorphe peut être au moins égale à 0,10 µm/s, et de préférence voisine d'environ 0,25 µm/s. En imposant cette limite inférieure pour la vitesse de dépôt du bore, par le choix adapté des débits des différents réactifs compte tenu de la vitesse de défilement de la fibre, on garantit que le bore déposé n'a pas le temps de cristalliser à la température de la réaction de dépôt.

Le dépôt de bore peut être effectué à une pression voisine de la pression atmosphérique.

Enfin, selon une caractéristique très avantageuse de l'invention, on peut ajouter un réactif gazeux précurseur du silicium dans le mélange initial de réactifs gazeux, tel que $SiH_4$, $SiH_3Cl$, $SiH_2Cl_2$, $SiHCl_3$ ou $SiCl_4$ ; ces composés ont dans l'ordre donné précédemment une réactivité décroissante. Ceci favorise un dopage de la couche de bore par le silicium.

Or, de façon tout à fait surprenante, on a constaté que la dureté de la couche de bore amorphe ainsi dopée au silicium est très supérieure à celle d'une couche de bore amorphe non dopée par du silicium : la dureté Vickers du bore amorphe non dopé déposé sur un substrat inerte vis-à-vis de l'halogénure de bore utilisé, tel que le carbone, est de l'ordre de 3000 à 4000 kg/mm², alors que celle du bore dopé avec du silicium déposé sur ce même substrat varie entre 4700 et 7800 kg/mm² (à titre indicatif, la dureté Vickers du diamant naturel est de 9000 kg/mm²).

D'autres éléments peuvent être employés comme dopants augmentant la dureté de la couche de bore, à partir de leurs précurseurs gazeux. Il s'agit par exemple du cobalt, du nickel, du Chrome, du cuivre, du fer, du scandium, du manganèse, du titane ou de l'aluminium.

D'autres caractéristiques et avantages de la présente invention apparaîtront dans la description suivante d'une fibre optique et d'un procédé selon l'invention, donnée à titre illustratif et nullement limitatif.

Dans les figures suivantes :

- la figure 1 est une vue en coupe transversale d'une fibre optique selon l'invention,
- la figure 2 est un schéma simplifié d'un dispositif pour la mise en oeuvre du procédé selon l'invention.

Dans ces figures, les éléments communs portent les mêmes numéros de référence.

On rappelle au préalable que le bore amorphe est du bore non cristallin, notamment caractérisé par l'absence de joints de grains dans sa structure, ce qui lui confère une forte résistance à la rupture et une bonne étanchéité. Il présente donc les mêmes avantages que le carbone non cristallin pour ce qui est de son étanchéité. En revanche, il présente une dureté nettement supérieure à celle du carbone non cristallin, qui confère à la fibre optique une résistance à l'abrasion améliorée, de sorte que l'épaisseur du revêtement protecteur de résine peut être réduite sensiblement par rapport au cas où la couche protectrice est réalisée à base de carbone. Ce revêtement protecteur de résine peut même être supprimé.

On rappelle que les structures non cristallines sont caractérisées par une désorganisation de la matière qui les constitue. Un taux de 1% de grains cristallisés correspond aux traces de cristallisation dont l'apparition est impossible à éviter, et qui sont donc présentes au titre des imperfections de structure de la couche de bore amorphe, sans conséquences notables sur les propriétés recherchées de la couche protectrice. Avec un tel taux de grains cristallisés, on peut dire que le bore déposé est "essentiellement" non cristallin ou amorphe.

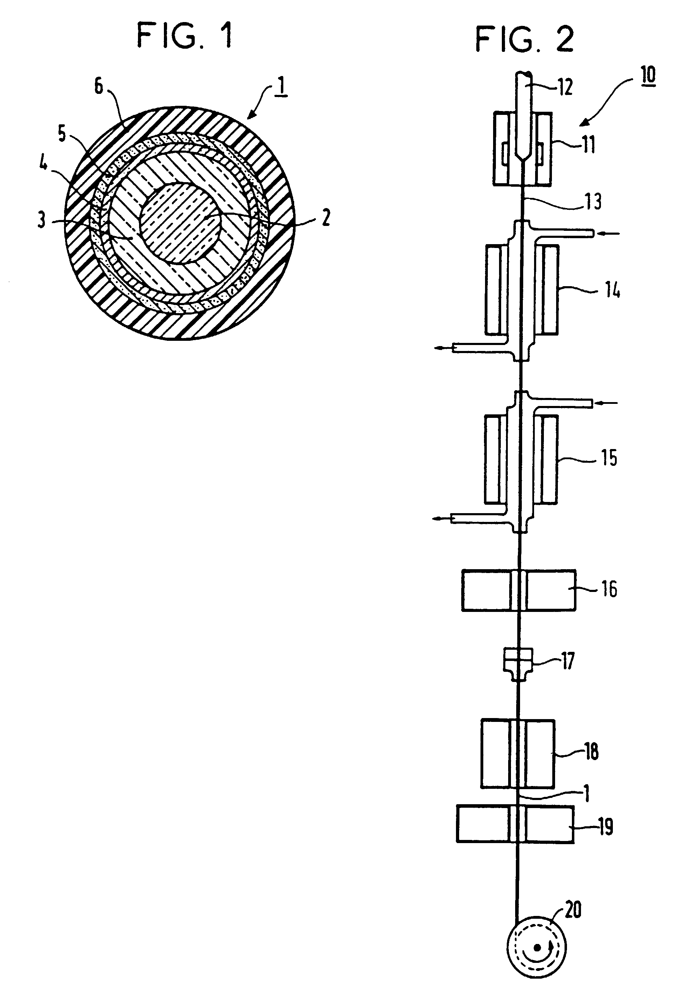

On voit en figure 1 une fibre 1 selon l'invention comportant, disposés coaxialement de l'intérieur vers l'extérieur :

- un coeur optique 2 à base de silice, servant au guidage de la majorité des ondes lumineuses,
- une gaine optique 3 également à base de silice,
- une couche 4 de carbone non cristallin de 10 à 50 nm d'épaisseur, de préférence voisine de 30 nm,
- une couche 5 de bore amorphe d'épaisseur comprise entre 10 et 200 nm, et de préférence voisine de 100 nm,
- un revêtement protecteur de résine 6, optionnel, d'épaisseur inférieure à 50 µm, et de préférence voisine de 10 µm.

Il est bien évident que le coeur et la gaine optique peuvent avoir une structure simple classique, c'est-à-dire comporter chacun une seule couche d'indice de réfraction constant, ou bien une structure plus complexe, c'est-à-dire être constitué chacun de plusieurs couches superposées, et avoir chacun un indice de réfraction variable. On ne décrira pas ici plus en détail la structure du coeur ou de la gaine optique, car cela n'entre pas dans le cadre de la présente invention. Toutefois, on comprend bien que l'invention peut être appliquée à n'importe laquelle des structures de fibres connues.

La couche 5 de bore non cristallin selon l'invention assure la protection mécanique de la fibre, conférant ainsi à cette demière une résistance à l'abrasion accrue permettant donc l'utilisation de la fibre 1 dans des câbles optiques de grande capacité et de grande compacité, l'épaisseur du revêtement de résine pouvant pratiquement être diminuée de moitié par rapport à ce qui est nécessaire lorsque l'on utilise une couche protectrice de carbone, voire même être supprimée. La couche 5 assure en outre une étanchéité comparable à celle assurée par la couche de carbone.

On va maintenant décrire, en relation avec la figure 2, qui montre de manière schématique un dispositif 10 permettant la fabrication de la fibre 1 selon l'invention, un procédé de dépôt selon l'invention.

Le dispositif 10 comprend, disposés les uns à la suite des autres au sein d'une installation verticale de fibrage :

- un four de fibrage 11 dans lequel est fibrée de manière classique et bien connue une préforme 12 présentant un coeur optique (non représenté) de composition identique et de diamètre supérieur à ceux du coeur 2, entouré d'une gaine optique (non représentée) de composition identique et d'épaisseur supérieure à celles de la gaine optique 3, le rapport des diamètres de la gaine optique au coeur optique de la préforme 12 étant identique au rapport des diamètres de la gaine optique 3 et du coeur optique 2,
- un réacteur 14 pour le dépôt de la couche 4 de carbone non cristallin sur la fibre optique nue 13,
- un réacteur 15 pour le dépôt de la couche 5 de bore amorphe,
- des moyens de contrôle 16 du diamètre de la fibre en sortie du réacteur 15,
- des moyens 17 d'enduction de résine, pour réaliser le revêtement de résine 6 sur la couche de bore 5,
- un dispositif 18 de polymérisation par rayonnement ultraviolet du revêtement de résine 6,
- des moyens 19 de contrôle du diamètre final de la fibre 1 obtenue,
- une bobine 20 d'enroulement de la fibre 1 terminée.

On n'a représenté qu'un seul réacteur 14 pour le dépôt de carbone, et un seul réacteur 15 pour le dépôt de bore. Toutefois, lorsque cela est nécessaire, le dépôt de carbone et/ou le dépôt de bore peuvent être effectués dans plusieurs réacteurs disposés les uns à la suite des autres le long de la ligne de fibrage.

Le dépôt de carbone peut être effectué par n'importe quel procédé connu, par exemple par voie chimique en phase vapeur.

On effectue pour obtenir le dépôt d'une couche de bore sur la fibre optique revêtue de carbone, une réaction de réduction d'un halogénure de bore, par exemple le chlorure de bore gazeux, par l'hydrogène gazeux, selon l'équation suivante :

$$2BCl_3 + 3H_2 \rightarrow 2B + 6HCl$$

Le dépôt de bore est ainsi effectué par voie chimique en phase vapeur. La réduction est effectuée à une température d'environ 1150°C, le rapport entre la concentration molaire de chlorure de bore et celle d'hydrogène étant voisin de 1/4.

Les dépôts de carbone et de bore sont effectués de préférence à une pression voisine de la pression atmosphérique, notamment lorsqu'ils sont effectués en ligne avec le fibrage, pour permettre l'utilisation de réacteurs ouverts pour l'entrée et la sortie de la fibre.

Pour obtenir une couche de bore amorphe 5, il est préférable que la vitesse de transfert du bore en phase gazeuse vers la surface de la fibre revêtue de carbone soit élevée. En effet, c'est cette vitesse élevée d'apport du bore à la surface de la fibre qui assure la formation d'une couche de bore essentiellement non cristallin. Cette vitesse élevée peut être obtenue par un renouvellement rapide des réactifs au niveau de la surface de la fibre. Un renouvellement rapide des réactifs à la surface de la fibre, qui s'accompagne d'une évacuation rapide des produits gazeux de la réaction de dépôt, c'est-à-dire l'acide chlorhydrique HCl dans le cas des réactifs $BCl_3$ et $H_2$, est obtenu à la fois grâce au fait que la fibre défile à grande vitesse dans le réacteur 15, et grâce au renouvellement de la phase gazeuse assuré par l'écoulement des gaz entre l'entrée et la sortie du réacteur 15. Ainsi, la vitesse de défilement de la fibre dans le réacteur sera de préférence au moins égale à 100 m/min, ce qui correspond à une vitesse de fibrage classique ; par conséquent, l'opération de dépôt de bore amorphe en ligne avec le fibrage ne ralentit pas la fabrication de la fibre optique.

Avec une vitesse de défilement de la fibre revêtue de carbone de 200 m/min dans le réacteur 15, il est possible de déposer, avec une vitesse de croissance du revêtement de bore de 0,25 μm/s (on peut obtenir une telle vitesse de croissance en choisissant un débit de chlorure de bore de 0,5 l/min et un débit d'hydrogène de 5 l/min), un revêtement de bore 7 d'épaisseur environ égale à 75 nm en 0,3 s.

On peut avantageusement ajouter à la phase gazeuse un réactif précurseur du silicium tel que $SiH_4$, $SiH_3Cl$, $SiH_2Cl_2$, $SiHCl_3$ ou $SiCl_4$. Dans ce cas, la couche de bore 5 sera dopée au silicium, ce qui accroît sa dureté.

Le dispositif 10 décrit en relation avec la figure 2 est un dispositif de fibrage classique, dans lequel on a ajouté un réacteur 14 de dépôt de la couche 4 de carbone, et un réacteur 15 de dépôt de la couche 5 de bore. Certains des éléments du dispositif 10 sont optionnels, comme les moyens 16 et 19 de contrôle de diamètre. En outre, les moyens de revêtement de résine peuvent être quelconques, et éventuellement, le revêtement de résine peut ne pas être réalisé en ligne.

Bien évidemment, la présente invention n'est pas limitée au mode de réalisation qui vient d'être décrit. En particulier, les valeurs numériques données pour les caractéristiques de la couche de bore et le procédé de dépôt de cette dernière ne le sont qu'à titre indicatif. D'autre part, une fibre optique selon l'invention peut comprendre, au-dessus de la couche de bore, d'autres revêtements en plus du revêtement de résine, comme notamment des revêtements colorés d'identification.

## Revendications

1. Fibre optique comprenant un coeur optique entouré d'une gaine optique, tous deux en un matériau à base de silice, et une couche protectrice constituée de bore amorphe, **caractérisée en ce que** ladite couche protectrice de bore est déposée sur une couche de carbone non cristallin, elle-même déposée directement sur ladite gaine optique.

2. Fibre selon la revendication 1 caractérisée en ce que ladite couche de bore (5) a une épaisseur comprise entre 10 et 200 nm, et de préférence de l'ordre de 100 nm.

3. Fibre selon l'une des revendications 1 ou 2 caractérisée en ce que ladite couche de bore est dopée avec du silicium.

4. Fibre optique selon l'une des revendications 1 à 3 caractérisée en ce que ladite couche de bore (5) est recouverte d'un revêtement de résine (6), d'épaisseur inférieure à 50 µm.

5. Procédé de dépôt d'une couche de bore amorphe sur une fibre optique comprenant un coeur optique entouré d'une gaine optique, tous deux en un matériau à base de silice, **caractérisé par le fait qu'**il comprend une étape de dépôt d'une couche de carbone sur ladite fibre, suivie d'une étape ultérieure de dépôt sur ladite couche de carbone de ladite couche protectrice de bore amorphe par voie chimique en phase vapeur, par réduction d'un halogénure de bore par l'hydrogène $H_2$.

6. Procédé selon la revendication 5 caractérisé en ce que l'halogénure de bore est le chlorure de bore.

7. Procédé selon l'une des revendications 5 ou 6 caractérisé en ce que le dépôt de bore est effectué à une température comprise entre 1000 et 1250°C.

8. Procédé selon l'une des revendications 5 à 7 caractérisé en ce que le rapport entre la concentration molaire en halogénure de bore et celle d'hydrogène est compris entre 1/20 et 2/3.

9. Procédé selon l'une des revendications 5 à 8 caractérisé en ce que les dépôts de carbone et de bore sont effectués en ligne avec le fibrage de ladite fibre optique, ladite fibre défilant à une vitesse au moins égale à 100 m/min durant le dépôt.

10. Procédé selon l'une des revendications 5 à 9 caractérisé en ce que ledit dépôt de bore est effectué à une pression voisine de la pression atmosphérique.

11. Procédé selon l'une des revendications 5 à 10 caractérisé en ce que l'on ajoute au mélange initial de réactifs un précurseur gazeux du silicium choisi parmi $SiH_4$, $SiH_3Cl$, $SiH_2Cl_2$, $SiHCl_3$ et $SiCl_4$.

## Patentansprüche

1. Optische Faser, die einen von einer optischen Umhüllung umgebenen optischen Kern, beide aus einem Material auf der Basis von Siliciumdioxid, und eine aus amorphem Bor bestehende Schutzschicht umfasst, **dadurch gekennzeichnet**, dass die Borschutzschicht auf einer Schicht aus nicht-kristallinem Kohlenstoff abgeschieden ist, die selbst direkt auf der optischen Umhüllung abgeschieden ist.

2. Optische Faser nach Anspruch 1, dadurch gekennzeichnet, dass die Borschicht (5) eine Dicke zwischen 10 und 200 nm und vorzugsweise von der Größenordnung von 100 nm besitzt.

3. Optische Faser nach einem der Ansprüche 1 oder 2, dadurch gekennzeichnet, dass die Borschicht mit Silicium dotiert ist.

4. Optische Faser nach einem der Ansprüche 1 bis 3, dadurch gekennzeichnet, dass die Borschicht (5) mit einem Harzmantel (6) mit einer Dicke unter 50 µm bedeckt ist.

5. Verfahren zur Abscheidung einer Schicht aus amorphem Bor auf einer optischen Faser, die einen mit einer optischen Umhüllung umgebenen optischen Kern, beide aus einem Material auf der Basis von Siliciumdioxid, umfasst, dadurch gekennzeichnet, dass es einen Schritt der Abscheidung einer Kohlenstoffschicht auf der Faser, gefolgt von einem späteren Schritt der Abscheidung der Schutzschicht aus amorphem Bor auf chemischem Wege in der Dampfphase auf der Kohlenstoffschicht durch Reduktion eines Borhalogenids durch Wasserstoff $H_2$.

6. Verfahren nach Anspruch 5, dadurch gekennzeichnet, dass das Borhalogenid Borchlorid ist.

7. Verfahren nach einem der Ansprüche 5 oder 6, dadurch **gekennzeichnet,** dass die Abscheidung des Bors bei einer Temperatur zwischen 1000 und 1250°C ausgeführt wird.

8. Verfahren nach einem der Ansprüche 5 bis 7, dadurch gekennzeichnet, dass das Verhältnis zwischen der molaren Konzentration von Borhalogenid und der von Wasserstoff zwischen 1/20 und 2/3 liegt.

9. Verfahren nach einem der Ansprüche 5 bis 8, dadurch gekennzeichnet, dass die Abscheidungen von Kohlenstoff und Bor direkt mit dem Ziehen der optischen Faser ausgeführt werden, wobei die Faser während der Abscheidung mit einer Geschwindigkeit von wenigstens 100 m/min abläuft.

10. Verfahren nach einem der Ansprüche 5 bis 9, dadurch gekennzeichnet, dass die Abscheidung des Bors bei einem Druck nahe dem atmosphärischen Druck ausgeführt wird.

11. Verfahren nach einem der Ansprüche 5 bis 10, dadurch gekennzeichnet, dass dem Ausgangsgemisch ein gasförmiges Vorstufenreagenz von Silicium zugegeben wird, das aus $SiH_4$, $SiH_3Cl$, $SiH_2Cl_2$, $SiHCl_3$ und $SiCl_4$ ausgewählt ist.

## Claims

1. An optical fiber comprising an optical core enclosed in optical cladding, both made of a silica-based material, and a protective layer constituted by amorphous boron,

    said optical fiber being characterized in that said boron protective layer is deposited on a non-crystalline carbon layer, itself deposited directly on said optical cladding.

2. A fiber according to claim 1, characterized in that the thickness of said boron layer (5) lies in the range 10 nm to 200 nm, and is preferably about 100 nm.

3. A fiber according to claim 1 or 2, characterized in that said boron layer is doped with silicon.

4. An optical fiber according to any one of claims 1 to 3, characterized in that said boron layer (5) is covered in a resin coating (6), that has a thickness of less than 50 μm.

5. A method of depositing an amorphous boron layer on an optical fiber comprising an optical core enclosed in optical cladding, both made of a silica-based material,

    the method being characterized by the fact that it includes a deposition step of depositing a layer of carbon on said fiber, followed by a subsequent step of depositing said amorphous boron protective layer chemically from the vapor phase on said layer of carbon, by reducing a boron halide by means of hydrogen $H_2$.

6. A method according to claim 5, characterized in that the boron halide is boron chloride.

7. A method according to claim 5 or 6, characterized in that boron deposition is performed at a temperature lying in the range 1000°C to 1250°C.

8. A method according to any one of claims 5 to 7, characterized in that the ratio of the molar concentration of the boron halide to that of the hydrogen lies in the range 1/20 to 2/3.

9. A method according to any one of claims 5 to 8, characterized in that the carbon and boron are deposited in line with fiber-drawing said optical fiber, the running speed of said fiber being not less than 100 m/min during deposition.

10. A method according to any one of claims 5 to 9, characterized in that said boron deposition is performed at a pressure in the vicinity of atmospheric pressure.

11. A method according to any one of claims 5 to 10, characterized in that a gaseous precursor of silicon, chosen from $SiH_4$, $SiH_3Cl$, $SiH_2Cl_2$, $SiHCl_3$, or $SiCl_4$, is added to the initial mix of reagents.

## FIG. 1

## FIG. 2